# EUROPEAN PATENT SPECIFICATION

(11) **EP 4 192 646 B1**
(45) Date of publication and mention of the grant of the patent: **30.04.2025**
(21) Application number: 21765706.3
(22) Date of filing: 05.08.2021
(51) Int. Cl.: B23Q 1/01, B23Q 1/62, B23Q 5/38, B23Q 5/56

(54) **MACHINE TOOL WITH TWO INDEPENDENT CARRIAGES**
WERKZEUGMASCHINE MIT ZWEI UNABHÄNGIGEN SCHLITTEN
MACHINE-OUTIL À DEUX CHARIOTS INDÉPENDANTS

(30) Priority: 05.08.2020 IT 202000019342
(43) Date of publication of application: 14.06.2023
(73) Proprietor: FIDIA S.p.A., 10099 San Mauro Torinese (Torino) (IT)
(72) Inventor: BENE, Giacomo, 10099 San Mauro Torinese (TO) (IT); MORFINO, Giuseppe, 10099 San Mauro Torinese (TO) (IT)
(74) Representative: Studio Torta S.p.A.
(86) International application number: PCT/IB2021/057200
(87) International publication number: WO 2022/029678

(56) References cited:
- EP-A1- 1 750 899
- EP-A2- 1 362 664
- EP-B1- 1 362 664
- EP-B1- 1 750 899
- DE-A1- 102009 013 356
- DE-A1- 19 645 324
- JP-A- H10 228 317
- US-A- 2 902 875
- US-A1- 2014 020 526

## Description

### TECHNICAL FIELD

The invention relates to a machine tool.

The invention has its preferred application in a computerized numerical control (CNC) milling machine having members that are movable along coordinated axes in order to move a milling tool within a work volume, to which reference will be made in the description below without because of this loosing in generality.

### PRIOR ART

In the last decades, CNC milling machines were developed, which are provided with movable members with different degrees of freedom, so as to allow for a great flexibility in the machining of a piece to be processed. In particular, known milling machines can be programmed so as to carry out a wide range of different machining operations, depending on special needs.

Documents US 2014/020526, EP 1750899 and EP 1362664 disclose respective examples of milling machines and documents US 2902875 and JP H10228317 disclose respective high-precision drive and transmission assembly to avoid backslashes. The machine tool of US 2014/020526 comprises two carriages arranged at a fixed distance with respect to each other and slidable together along a guide element; and a slide interposed between the two carriages, carried by the two carriages and slidable in relation to the two carriages; wherein said carriages are independent and mechanically linked together solely by said slide.

In order to fulfil the requirements mentioned above, known milling machines comprise a plurality of members that are movable according to coordinated axes. These members can comprise, for example, a carriage that can slide along a guide in a first direction, for example a horizontal one, and a slide carried by the carriage in a projecting manner and movable, relative to the latter, along a second direction perpendicular to the first direction, for example a vertical one.

Hence, the carriage typically has a "cross-like" shape, since it has, on a first face of its, a first seat along an axis for the coupling to the guide and, on a second face of its opposite the first one, a second seat orthogonal to the first seat for the coupling to the slide.

Since the two seats cannot intersect one another, this necessarily leads to a projecting arrangement of the slide (and, hence, of the milling head) relative to the guide of the carriage. As a consequence, the weight of the carriage and of the slide, as well as the forces exchanged with the piece during the machining, determine significant bending moments relative to the guide, with potentially negative effects on the machining precision. In order to avoid these effects, the members of the machine need to be properly sized so as to ensure the necessary stiffness thereof, which leads to an increase in the weight and in the cost of the components as well as to dynamic problems.

### SUBJECT-MATTER OF THE INVENTION

The object of the invention is to at least partly overcome the drawbacks of the prior art.

In particular, the object of the invention is to provide a lighter machine tool with a smaller cost, which is capable of carrying out high-speed machining operations, ensuring at the same time a suitable quality of the machining.

According to the invention, there is provided a machine tool comprising:
- a substantially straight guide element extending along a first axis and comprising a first rack extending in a direction parallel to the first axis;
- two carriages, which are arranged at a fixed distance from one another along the guide element and are capable of sliding together along the guide element, at least one of the two carriages comprising at least one motor fitted with a toothed wheel which engages with the first rack; and
- a slide, which is interposed between the two carriages, is carried by the two carriages and can slide relative to the two carriages along a second axis substantially perpendicular to the first axis;

wherein said carriages are independent and are mechanically connected to one another solely by means of said slide;
wherein one of the two carriages comprises a first motor and the other of the two carriages comprises a second motor, the first and second motors being fitted with respective toothed wheels which mesh with the first rack and are configured to exert respective torques in opposite directions upon the respective toothed wheels; and
wherein the first and the second motor are configured to control, in a coordinated manner, the torques exerted upon the respective toothed wheels so as to modulate the stiffness of the connection between the carriages and the slide in a direction substantially parallel to the first axis.

Thanks to the invention, the bending moment acting upon the guide element is limited by the fact that the slide is arranged between the two carriages and, hence, can be placed close to the guide element.

In this way, the guide element and the relative support structure are not subjected to significant deformations, thus ensuring better performances in terms of machining precision.

Alternatively, the required precision being the same, the weight and the cost of the machine can be reduced.

Furthermore, thanks to the fact that the two carriages are independent of one another, by controlling the sliding of the two carriages along the guide element it is possible to ensure an adequate stiffness of the machine in order to fulfil requirements set by different operating conditions.

Basically, during rough-milling operations involving great forces, the two motors are controlled so as to exert opposite torques with a high modulus upon the respective toothed wheels so as to obtain a high-stiffness connection between the carriages and the slide.

During superficial finishing operations involving smaller forces, the two motors are configured to exert opposite torques with a smaller modulus upon the respective toothed wheels so as to obtain a connection between the carriages and the slide with a smaller stiffness, thus limiting wear.

The technical advantages described above are more evident in large-sized machine tools designed according to the invention.

According to a preferred embodiment of the invention, the slide carries a machining head.

According to an embodiment of the invention, the guide element comprises at least one rail extending in a direction parallel to the first axis and each one of the carriages comprises at least one runner coupled to the rail in a sliding manner along the direction of the first axis and in a rigid manner in a direction perpendicular to the first axis.

In this way, the space taken up by the guide system is minimized, since the guide system does not require further constraint elements in the other directions.

In particular, the slide comprises a second rack extending in a direction substantially parallel to the second axis; at least one of the two carriages comprising at least one motor provided with a toothed wheel, which meshes with the second rack so as to control the sliding of the slide along the second rack.

In particular, one of the two carriages comprises a third motor and a fourth motor, which are provided with respective toothed wheels, which mesh with the second rack and are configured to exert respective torques in opposite direction upon the respective toothed wheels.

In this way, the clearances of the coupling between the toothed wheels and the second rack can be limited and a suitable precision in the movement of the slide can be ensured.

Alternatively, one of the two carriages comprises a third motor and the other one of the two carriages comprises a fourth motor, said third and fourth motor being provided with respective toothed wheels, which mesh with the second rack and are configured to exert respective torques in opposite directions upon the respective toothed wheels.

In this configuration, the clearances between the toothed wheels and the rack are limited by the weight force of the slide.

### BRIEF DESCRIPTION OF THE DRAWINGS

Further features and advantages of the invention will be best understood upon perusal of the following description of a non-limiting embodiment thereof, with reference to the accompanying Figures, wherein:
- Figure 1 is a perspective, partial view of a machine tool according to the invention;
- Figure 2 is a front view of the machine tool of Figure 1;
- Figure 3 is a side elevation view of the machine tool of Figure 1;
- Figure 4 is a top view of the machine tool of Figure 1;
- Figure 5 is a sectional view of the machine tool of Figure 1 along section lines V-V;
- Figure 6 is a sectional view of the machine tool of Figure 1 along section lines VI-VI; and
- Figure 7 is a partially sectional, plan view of a further variant of the machine tool of Figure 1.

### PREFERRED EMBODIMENT OF THE INVENTION

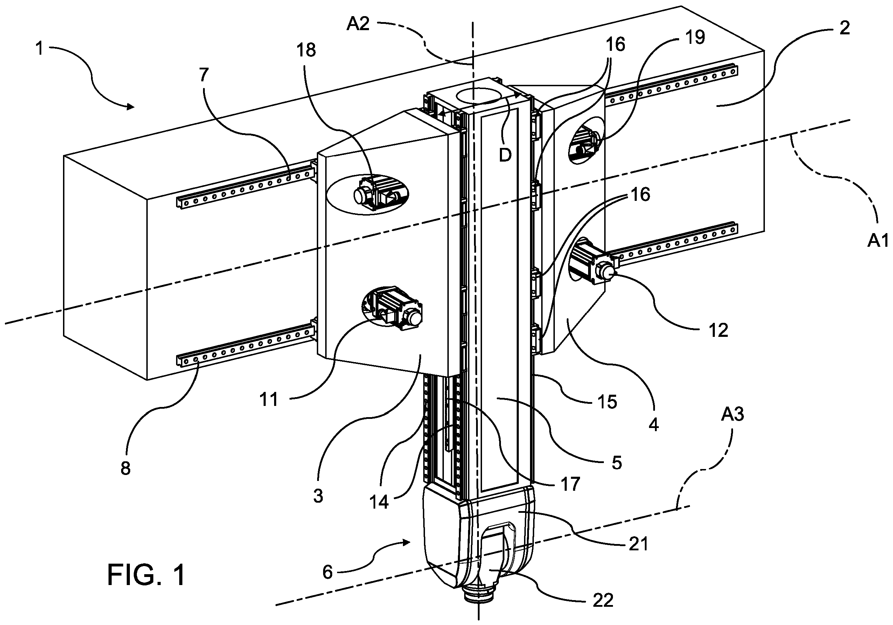

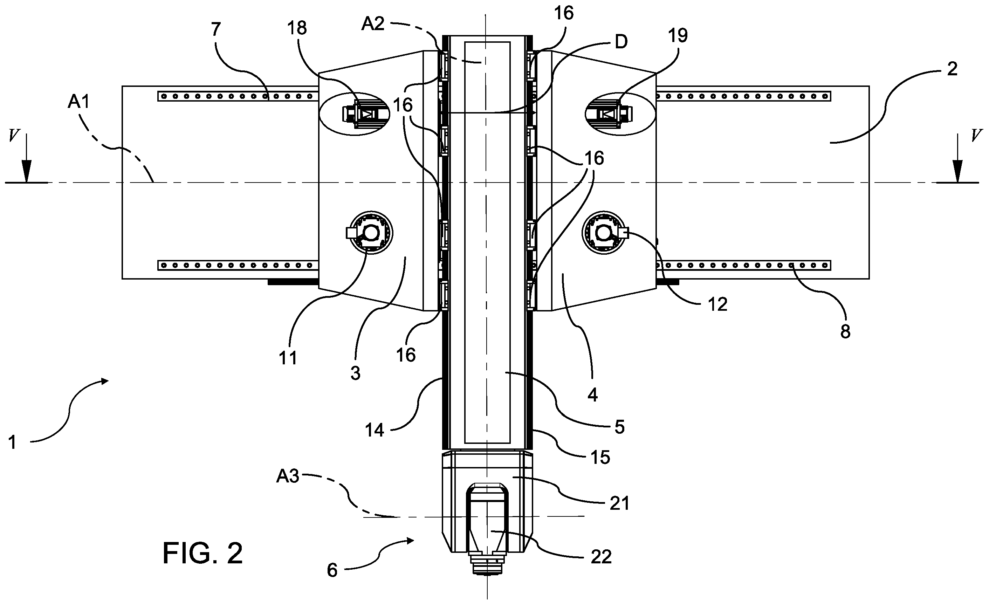

With reference to Figures 1 and 2, number 1 indicates, as a whole, a machine tool, in particular a milling machine, preferably a CNC milling machine. The milling machine 1 comprises a substantially straight guide element 2 extending along an axis A1, for example a horizontal one; two carriages 3 and 4, which are arranged at a fixed distance D from one another along the guide element 2 and are capable of sliding together along the guide element 2; a slide 5, which is interposed between the carriages 3 and 4, is carried by the carriages 3 and 4 and can slide relative to the carriages 3 and 4 along an axis A2 perpendicular to the axis A1, in particular a vertical one; and a milling head 6, which is carried by the slide 5 and is configured to carry a milling tool (which is not shown in the accompanying Figures).

The guide element 2 is supported by a fixed or movable support structure, which is not shown in the accompanying figures because it is not part of the invention. In particular, said support structure can assume different configurations. By way of example, the support structure comprises two vertical supports, each fixed to a respective end of the guide element 2, so as to define a gantry milling machine 1.

With reference to Figures 1-3, the guide element 2 comprises a rail 7 and a rail 8, each extending in a direction that is substantially parallel to the axis A1. In particular, the rails 7 and 8 have a section shaped like a dovetail.

According to a variant of the invention, which is not shown in the accompanying Figures, the guide element 2 can comprise only one rail extending in a direction parallel to the axis A1. The number of rails of the guide element 2 can change and is not limited by the invention.

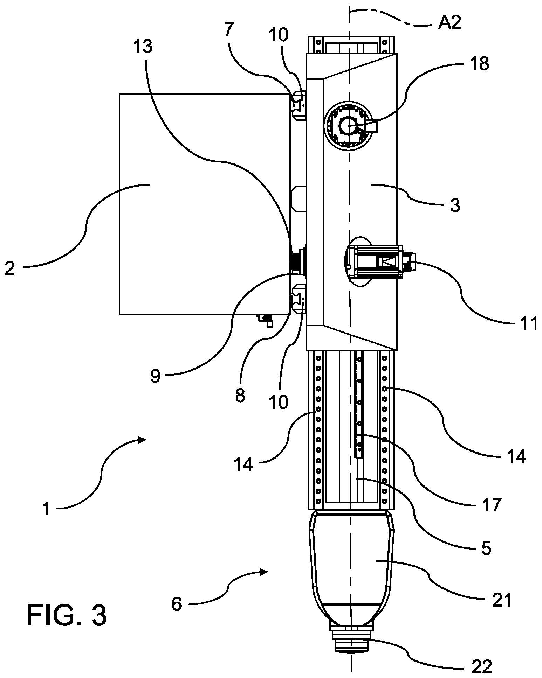

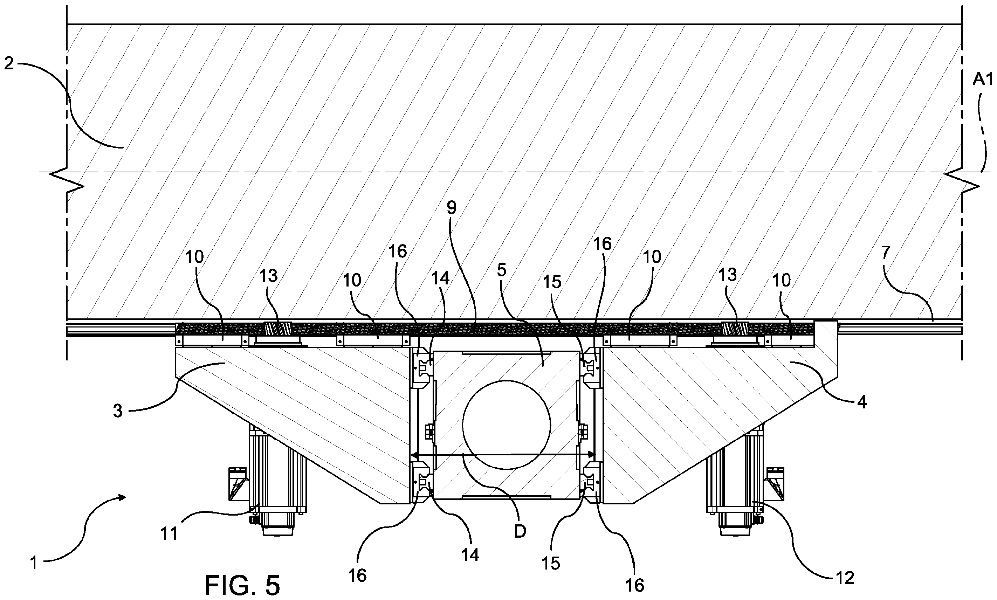

With reference to Figures 3 and 5, the guide element 2 comprises a rack 9 extending in a direction that is parallel to the axis A1 and, hence, parallel to the rails 7 and 8.

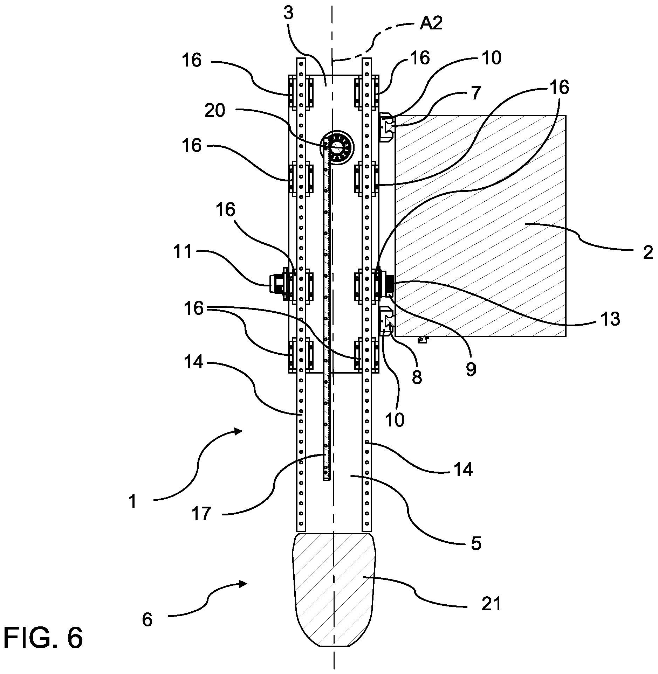

With reference to Figures 3, 4 and 6, each one of the carriages 3 and 4 comprises four runners 10, two of them being configured to slide on the rail 7 and the other two being configured to slide on the rail 8. In particular, each runner 10 is shaped so as to be coupled to the dovetail-shaped section of the rails 7 and 8 in a sliding manner along the direction of the axis A1 and in a rigid manner in the directions orthogonal to the axis A1, so as to only allow the carriages 3 and 4 to slide along the rails 7 and 8 and avoid the relative movement of the carriages 3 and 4 relative to the guide element 2 in all other directions.

According to a variant of the invention, which is not shown in the accompanying Figures, each carriage 3 and 4 is provided with only two runners 10, one of them being configured to slide on the rail 7 and the other one being configured to slide on the rail 8. The number of runners 10 of the two carriages 3 and 4 can change and is not limited by the invention.

With reference to Figures 1-5, the carriage 3 comprises an electric motor 11 and the carriage 4 comprises an electric motor 12. Each electric motor 11, 12 is provided with a respective toothed wheel 13 (Figures 3 and 5), which meshes with the rack 9 (Figures 3 and 5).

In particular, the motors 11 and 12 are configured to exert respective torques in opposite directions upon the respective toothed wheels 13 (Figures 3 and 5) so as to limit the clearances of the coupling between the toothed wheels 13 (Figures 3 and 5) and the rack 9 (Figures 3 and 5).

With reference to Figures 1-7, the slide 5 is oblong in the direction A2, has a substantially rectangular section and comprises at least two rails 14 and 15, each facing the respective carriage 3, 4 and extending in a direction that is parallel to the axis A2. In particular, the rails 14 and 15 have a section shaped like a dovetail.

Each carriage 3, 4 comprises at least one slider 16, which is configured to slide along the respective rail 14, 15. In particular, each slider 16 is shaped so as to be coupled to the dovetail-shaped section of the rails 14 and 15 in a sliding manner along the direction of the axis A2 and in a rigid manner in the directions orthogonal to the axis A2, so as to only allow the slide 5 to slide along the axis A2 and avoid the relative movement of the slide 5 relative to the carriages 3 and 4 in all other directions.

In the specific case described and shown herein, the slide 5 comprises two rails 14 and two rails 15. The carriage 3 comprises eight sliders 16, four of them being configured to slide on one of the two rails 14 and four of them being configured to slide on the other one of the two rails 14. The carriage 4 comprises eight sliders 16, four of them being configured to slide on one of the two rails 15 and four of them being configured to slide on the other one of the two rails 15. The number of rails 14 and 15 and of sliders 16 can change and is not limited by the invention.

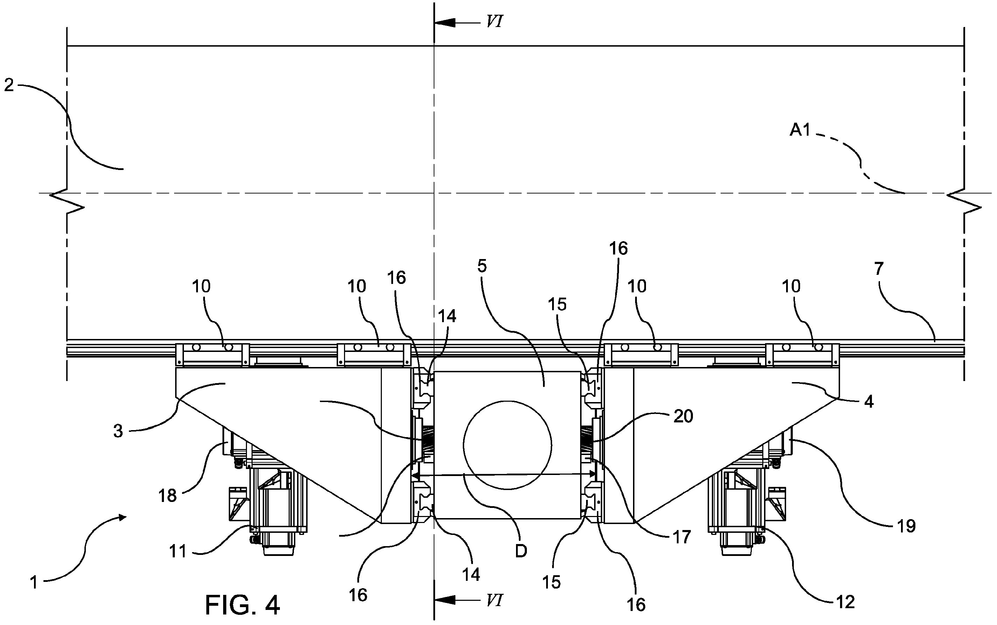

With reference to Figure 4, the slide 5 comprises two racks 17, each extending in a direction that is parallel to the axis A2 and, hence, parallel to the rails 14 and 15.

Furthermore, the carriage 3 comprises an electric motor 18 and the carriage 4 comprises an electric motor 19. Each electric motor 18, 19 is provided with a respective toothed wheel 20, which meshes with the respective rack 17.

In particular, the motors 18 and 19 are configured to exert respective torques in opposite directions upon the respective toothed wheels 20 so as to limit the clearances of the coupling between the toothed wheels 20 and the rack 17.

According to a variant of the invention, which is not shown in accompanying Figures, the sole carriage 3 comprises a motor.

With reference to Figures 1-3, the milling head 6 comprises two bodies 21 and 22, which are articulated to one another, and a milling tool, which is carried by the body 22 and is not shown in the accompanying Figures.

In particular, the body 21 is connected to the slide 5 so as to rotate relative to the slide 5 around the axis A2 and the body 22 is connected to the body 21 so as to slide relative to the body 21 around an axis A3 that is perpendicular to the axis A2.

Furthermore, the milling head 6 comprises motors and/or actuators, which are not shown in the accompanying Figures and are configured to move the bodies 21 and 22 and to start the rotation of the milling tool, which is not shown in the accompanying Figures.

In Figures 1-7, the axis A1 of the guide element 2 is horizontal and the axis A2 is vertical; according to a variant of the invention, which is not shown in the accompanying Figures, the axis A1 could be vertical and the axis A2 could be horizontal.

In use and with reference to Figures 1-4, the motors 11 and 12 start the sliding of the carriages 3 and 4 along the guide element 2. In particular, in order to start the sliding of the carriages 3 and 4 in a first direction, the power of one of the motors 11 and 12 is increased so as to increase the torque of one of the two motors 11 and 12 compared to the other one of the two motors 11 and 12. In order to start the sliding of the carriages 3 and 4 in a second direction, which is contrary to the first direction, the power of the other one of the two motors 11 and 12 is increased.

In particular, the motors 11 and 12 control, in a coordinated manner,
the torques exerted upon the respective toothed wheels 13 so as to modulate the stiffness of the connection between the carriages 3, 4 and the slide 5 depending on the forces involved.

Similarly, the motors 18 and 19 start the sliding of the slide 5 relative to the carriages 3 and 4 in the direction of the axis A2.

The bodies 21 and 22 are oriented so as to move the milling tool, which is not shown in the accompanying Figures, within a work volume based on the specific machining needs.

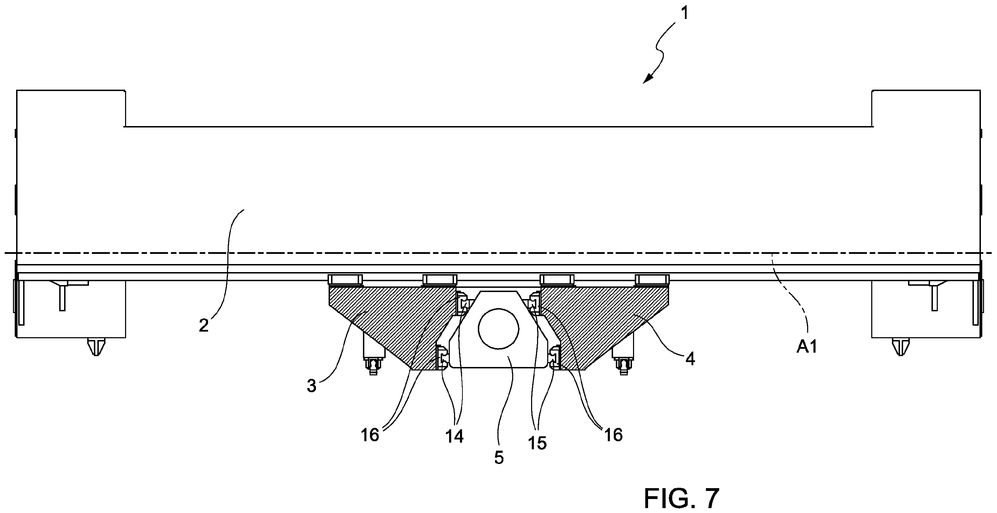

Figures 7 shows a variant in which the slide 5 has a tapered section, instead of a substantially rectangular one; therefore, the two rails 14 and the two rails 15 on the opposite sides of the slide 5 are not coplanar to one another, but are staggered in a direction parallel to the axis A1. The carriages 3, 4 are shaped in a corresponding manner, on their side facing the slide 5, and the sliders 16 of each carriage 3, 4 are arranged on planes which, in turn, are staggered in order to cooperate with the corresponding rails 14 or 15.

Finally, the invention can evidently be subjected to further variants to the embodiments described herein, though without going beyond the scope of protection set forth in the appended claims.

For example, the motors controlling the movement of the carriages 3, 4 along the axis A1 and the sliding of the slide 5 along the axis A2 could be hydraulic or pneumatic motors.

## Claims

1. Machine tool comprising:
- a substantially straight guide element (2) extending along a first axis (A1) and comprising a first rack (9) extending in a direction parallel to the first axis (A1);
- two carriages (3, 4) arranged at a fixed distance (D) with respect to each other along the guide element (2) and slidable together along the guide element (2), at least one of the two carriages (3, 4) comprising at least one motor (11; 12) fitted with a toothed wheel (13) which engages with the first rack (9); and
- a slide (5) interposed between the two carriages (3, 4), carried by the two carriages (3, 4) and slidable in relation to the two carriages (3, 4) along a second axis (A2) perpendicular to the first axis (A1);
wherein said carriages (3, 4) are independent and mechanically linked together solely by said slide (5);
wherein one of the two carriages (3, 4) comprises a first motor (11) and the other of the two carriages (3, 4) comprises a second motor (12), the first and second motors (11, 12) being fitted with respective toothed wheels (13) which mesh with the first rack (9) and are configured to exert respective torques in opposite directions upon the respective toothed wheels (13); and
wherein the first and the second motor (11, 12) are configured to control, in a coordinated manner, the torques exerted upon the respective toothed wheels (13) so as to modulate the stiffness of the connection between the carriages (3, 4) and the slide (5) in a direction substantially parallel to the first axis (A1).

2. Machine tool as claimed in claim 1, comprising a machining head (6) carried by the slide (5) and configured to carry a machining tool.

3. Machine tool as claimed in one of the above claims, where the guide element (2) comprises at least one rail (7; 8) extending in a direction parallel to the first axis (A1), and each of the carriages (3, 4) comprises at least one runner (10) coupled to the rail (7, 8) slidably along the direction of the first axis (A1) and rigidly in a direction perpendicular to the first axis (A1).

4. Machine tool as claimed in any of the above claims, wherein the slide (5) comprises at least two rails (14, 15), each of which is facing the respective carriage (3; 4) and extends in a direction parallel to the second axis (A2); each carriage (3; 4) being fitted with at least one slider (16) coupled to the respective rail (14, 15) in a sliding way along the direction of the second axis (A2) and substantially rigid in a direction perpendicular to the second axis (A2).

5. Machine tool as claimed in any of the above claims, wherein the slide (5) comprises a second rack (17) extending in the direction parallel to the second axis (A2); at least one of the two carriages (3; 4) comprising at least one motor (18; 19) fitted with a toothed wheel (20) which engages with the second rack (17).

6. Machine tool as claimed in claim 5, wherein one of the two carriages (3; 4) comprises a third motor (18) and a fourth motor (19), which are fitted with their respective toothed wheels (20) which engage with the second rack (17) and are configured to exert their respective torques in opposite direction upon the respective toothed wheels (20).

7. Machine tool as claimed in claim 5, wherein one of the two carriages (3, 4) comprises a third motor (18) and the other of the two carriages (3, 4) comprises a fourth motor (19), said third and fourth motors (18, 19) being fitted with respective toothed wheels (20) which mesh with the second rack (17) and are designed to exert respective torques in opposite directions upon the respective toothed wheels (20).

## Patentansprüche

1. Werkzeugmaschine, umfassend:
- ein im Wesentlichen gerades Führungselement (2), das sich entlang einer ersten Achse (A1) erstreckt und eine erste Zahnstange (9) umfasst, die sich in einer Richtung parallel zu der ersten Achse (A1) erstreckt;
- zwei Wagen (3, 4), die in einem festen Abstand (D) zueinander entlang des Führungselements (2) angeordnet und gemeinsam entlang des Führungselements (2) verschiebbar sind, wobei mindestens einer der zwei Wagen (3, 4) mindestens einen Motor (11; 12) umfasst, der mit einem Zahnrad (13) versehen ist, das mit der ersten Zahnstange (9) eingreift; und
- einen Schlitten (5), der zwischen den zwei Wagen (3, 4) angeordnet ist, der von den zwei Wagen (3, 4) getragen wird und in Bezug auf die zwei Wagen (3, 4) entlang einer zweiten Achse (A2), die senkrecht zur ersten Achse (A1) verläuft, verschiebbar ist;
wobei die Wagen (3, 4) unabhängig sind und nur durch den Schlitten (5) mechanisch miteinander verknüpft sind;
wobei einer der zwei Wagen (3, 4) einen ersten Motor (11) umfasst und der andere der zwei Wagen (3, 4) einen zweiten Motor (12) umfasst, wobei der erste und der zweite Motor (11, 12) mit jeweiligen Zahnrädern (13) versehen sind, die mit der ersten Zahnstange (9) kämmen und so konfiguriert sind, dass sie jeweilige Drehmomente in entgegengesetzten Richtungen auf die jeweiligen Zahnräder (13) ausüben; und
wobei der erste und der zweite Motor (11, 12) so konfiguriert sind, dass sie in koordinierter Weise die auf die jeweiligen Zahnräder (13) ausgeübten Drehmomente steuern, um die Steifigkeit der Verbindung zwischen den Wagen (3, 4) und dem Schlitten (5) in einer Richtung im Wesentlichen parallel zur ersten Achse (A1) zu modulieren.

2. Werkzeugmaschine nach Anspruch 1, umfassend einen von dem Schlitten (5) getragenen Bearbeitungskopf (6), der zum Tragen eines Bearbeitungswerkzeugs konfiguriert ist.

3. Werkzeugmaschine nach einem der vorhergehenden Ansprüche, wobei das Führungselement (2) mindestens eine Schiene (7; 8) umfasst, die sich in einer Richtung parallel zur ersten Achse (A1) erstreckt, und jeder der Wagen (3, 4) mindestens einen Läufer (10) umfasst, der mit der Schiene (7, 8) entlang der Richtung der ersten Achse (A1) verschiebbar und in einer Richtung senkrecht zur ersten Achse (A1) starr gekoppelt ist.

4. Werkzeugmaschine nach einem der vorhergehenden Ansprüche, wobei der Schlitten (5) mindestens zwei Schienen (14, 15) umfasst, von denen jede dem jeweiligen Wagen (3; 4) zugewandt ist und sich in einer Richtung parallel zur zweiten Achse (A2) erstreckt; wobei jeder Wagen (3; 4) mit mindestens einem Schieber (16) versehen ist, der mit der jeweiligen Schiene (14, 15) gleitend entlang der Richtung der zweiten Achse (A2) gekoppelt und in einer Richtung senkrecht zur zweiten Achse (A2) im Wesentlichen starr ist.

5. Werkzeugmaschine nach einem der vorhergehenden Ansprüche, wobei der Schlitten (5) eine zweite Zahnstange (17) umfasst, die sich parallel zur zweiten Achse (A2) erstreckt, wobei mindestens einer der zwei Wagen (3; 4) mindestens einen Motor (18; 19) umfasst, der mit einem Zahnrad (20) versehen ist, das mit der zweiten Zahnstange (17) eingreift.

6. Werkzeugmaschine nach Anspruch 5, wobei einer der zwei Wagen (3; 4) einen dritten Motor (18) und einen vierten Motor (19) umfasst, die mit ihren jeweiligen Zahnrädern (20) versehen sind, die mit der zweiten Zahnstange (17) eingreifen und so konfiguriert sind, dass sie ihre jeweiligen Drehmomente in entgegengesetzter Richtung auf die jeweiligen Zahnräder (20) ausüben.

7. Werkzeugmaschine nach Anspruch 5, wobei einer der zwei Wagen (3, 4) einen dritten Motor (18) und der andere der zwei Wagen (3, 4) einen vierten Motor (19) umfasst, wobei der dritte und der vierte Motor (18, 19) mit jeweiligen Zahnrädern (20) versehen sind, die mit der zweiten Zahnstange (17) kämmen und so ausgestaltet sind, dass sie jeweilige Drehmomente in entgegengesetzten Richtungen auf die jeweiligen Zahnräder (20) ausüben.

## Revendications

1. Machine-outil comprenant :
- un élément de guidage sensiblement rectiligne (2) s'étendant le long d'un premier axe (A1) et comprenant une première crémaillère (9) s'étendant dans une direction parallèle au premier axe (A1) ;
- deux chariots (3, 4) disposés à une distance fixe (D) l'un par rapport à l'autre le long de l'élément de guidage (2) et pouvant coulisser ensemble le long de l'élément de guidage (2), au moins un des deux chariots (3, 4) comprenant au moins un moteur (11 ; 12) équipé d'une roue dentée (13) qui s'engrène dans la première crémaillère (9) ; et
- un coulisseau (5) interposé entre les deux chariots (3, 4), porté par les deux chariots (3, 4) et pouvant coulisser par rapport aux deux chariots (3, 4) selon un second axe (A2) perpendiculaire au premier axe (A1) ;
lesdits chariots (3, 4) étant indépendants et reliés mécaniquement entre eux uniquement par ledit coulisseau (5) ;
l'un des deux chariots (3, 4) comprenant un premier moteur (11) et l'autre des deux chariots (3, 4) comprenant un deuxième moteur (12), les premier et deuxième moteurs (11, 12) étant équipés de roues dentées (13) respectives qui s'engrènent avec la première crémaillère (9) et sont configurées pour exercer des couples respectifs dans des directions opposées sur les roues dentées (13) respectives ; et
le premier et le deuxième moteur (11, 12) étant configurés pour commander, de manière coordonnée, les couples exercés sur les roues dentées (13) respectives de manière à moduler la rigidité du raccordement entre les chariots (3, 4) et le coulisseau (5) dans une direction sensiblement parallèle au premier axe (A1).

2. Machine-outil selon la revendication 1, comprenant une tête d'usinage (6) portée par le coulisseau (5) et configurée pour porter un outil d'usinage.

3. Machine-outil selon l'une des revendications précédentes, où l'élément de guidage (2) comprend au moins un rail (7 ; 8) s'étendant dans une direction parallèle au premier axe (A1), et chacun des chariots (3, 4) comprend au moins un patin (10) couplé au rail (7, 8) de manière coulissante le long de la direction du premier axe (A1) et de manière rigide dans une direction perpendiculaire au premier axe (A1).

4. Machine-outil selon l'une quelconque des revendications précédentes, le coulisseau (5) comprenant au moins deux rails (14, 15), chacun faisant face au chariot (3 ; 4) respectif et s'étendant dans une direction parallèle au second axe (A2) ; chaque chariot (3 ; 4) étant équipé d'au moins un coulisseau (16) couplé au rail respectif (14, 15) de manière coulissante le long de la direction du second axe (A2) et sensiblement rigide dans une direction perpendiculaire au second axe (A2).

5. Machine-outil selon l'une quelconque des revendications précédentes, le chariot (5) comprenant une seconde crémaillère (17) s'étendant dans la direction parallèle au second axe (A2) ; au moins l'un des deux chariots (3 ; 4) comprenant au moins un moteur (18 ; 19) équipé d'une roue dentée (20) qui s'engrène dans la seconde crémaillère (17).

6. Machine-outil selon la revendication 5, l'un des deux chariots (3 ; 4) comprenant un troisième moteur (18) et un quatrième moteur (19), qui sont équipés de leurs roues dentées (20) respectives qui s'engrènent dans la seconde crémaillère (17) et sont configurées pour exercer leurs couples respectifs dans une direction opposée sur les roues dentées (20) respectives.

7. Machine-outil selon la revendication 5, l'un des deux chariots (3, 4) comprenant un troisième moteur (18) et l'autre des deux chariots (3, 4) comprenant un quatrième moteur (19), lesdits troisième et quatrième moteurs (18, 19) étant équipés de roues dentées (20) respectives qui s'engrènent avec la seconde crémaillère (17) et sont conçues pour exercer des couples respectifs dans des directions opposées sur les roues dentées (20) respectives.
